# EUROPÄISCHE PATENTSCHRIFT

(11) **EP 3 784 373 B1**
(45) Veröffentlichungstag und Bekanntmachung des Hinweises auf die Patenterteilung: **22.06.2022**
(21) Anmeldenummer: 19719330.3
(22) Anmeldetag: 26.04.2019
(51) Int. Cl.: B01F 3/04, B01J 3/00, C02F 1/72, C02F 11/08, B01J 19/00, C02F 103/18

(54) **VERFAHREN UND OXIDATIONSREAKTOR ZUR BEHANDLUNG EINER SULFIDHALTIGEN ABLAUGE**
METHOD AND OXIDATION REACTOR FOR TREATING A SPENT LIQUOR CONTAINING SULPHIDES
PROCÉDÉ ET RÉACTEUR OXIDATIF DE TRAITEMENT D'UNE LIQUEUR USÉE CONTENANT DU SULFURE

(30) Priorität: 27.04.2018 DE 102018110296; 19.06.2018 EP 18178644
(43) Veröffentlichungstag der Anmeldung: 03.03.2021
(73) Patentinhaber: Linde GmbH, 82049 Pullach (DE)
(72) Erfinder: WELLENHOFER, Anton, 82069 Hohenschäftlarn (DE); ZANDER, Jörg, 81479 München (DE); ANANIEVA, Ekaterina, 81369 München (DE); HAIRER, Florian, 80801 München (DE); BAUS, Michael, 82166 Gräfelfing (DE); SCHUBERT, Martin, 81375 München (DE)
(86) Internationale Anmeldenummer: PCT/EP2019/060800
(87) Internationale Veröffentlichungsnummer: WO 2019/207136

(56) Entgegenhaltungen:
- WO-A1-2011/002138
- GB-A- 1 475 452

## Beschreibung

Die Erfindung betrifft ein Verfahren zur Behandlung einer Ablauge einer Laugewäsche unter Verwendung eines Oxidationsreaktors und eine entsprechende Anlage sowie einen entsprechenden Oxidationsreaktor gemäß den jeweiligen Oberbegriffen der unabhängigen Patentansprüche.

### Stand der Technik

Olefine wie Ethylen oder Propylen, aber auch Diolefine wie Butadien sowie Aromaten können durch Dampfspalten (engl. Steam Cracking) aus Paraffinen hergestellt werden. Entsprechende Verfahren sind seit langem bekannt. Zu Details sei auf Fachliteratur wie den Artikel "Ethylene" in Ullmann's Encyclopedia of Industrial Chemistry, Onlineausgabe, 15. April 2007, DOI 10.1002/14356007.a10_045.pub2, verwiesen.

Beim Dampfspalten wird ein sogenanntes Spaltgas (engl. Cracked Gas) erhalten, das neben den Zielprodukten nicht umgesetzte Kohlenwasserstoffe und unerwünschte Nebenprodukte enthält. Dieses Spaltgas wird in bekannten Verfahren zunächst einer Aufbereitung unterworfen, bevor es einer Fraktionierung zur Gewinnung unterschiedlicher Kohlenwasserstoffe bzw. Kohlenwasserstofffraktionen zugeführt wird. Details sind in dem zitierten Artikel insbesondere in Abschnitt 5.3.2.1, "Front-End Section" und 5.3.2.2., "Hydrocarbon Fractionation Section", beschrieben.

Eine entsprechende Aufbereitung umfasst insbesondere eine sogenannte Sauergasentfernung, bei der Komponenten wie Kohlendioxid, Schwefelwasserstoff und Mercaptane aus dem Spaltgas abgetrennt werden. Das Spaltgas wird typischerweise vor und nach einer entsprechenden Behandlung verdichtet. Beispielsweise kann das Spaltgas einem sogenannten Rohgasverdichter auf einem Zwischendruckniveau entnommen, der Sauergasentfernung unterworfen, und anschließend in dem Rohgasverdichter weiter verdichtet werden.

Die Sauergasentfernung kann insbesondere eine sogenannte Laugewäsche unter Verwendung von Natronlauge umfassen. Insbesondere bei hohen Konzentrationen an Schwefelverbindungen kann die Laugewäsche auch mit einer Aminwäsche, beispielsweise unter Verwendung von Ethanolamin, kombiniert werden. Die in der Laugewäsche erhaltene Ablauge, die Sulfid und Carbonat in einem Gehalt von einigen Prozent aufweist, wird typischerweise in einer Ablaugebehandlung oxidiert und ggf. neutralisiert, bevor sie einer biologischen Abwasserbehandlung unterworfen werden kann. Die Oxidation dient zur Entfernung toxischer Komponenten und zur Reduzierung des biologischen Sauerstoffbedarfs. Die Ablaugeoxidation wird typischerweise in Form einer chemischen Nassoxidation des Sulfids mit Sauerstoff in Lösung durchgeführt.

Aus dem Stand der Technik sind mehrere unterschiedliche Verfahren zur Nassoxidation von verbrauchten Ablaugen bekannt. Beispielsweise sei auf den Artikel von C.B. Maugans und C. Alice, "Wet Air Oxidation: A Review of Commercial Subcritical Hydrothermal Treatment", IT3'02 Conference, 13. bis 17. Mai 2002, New Orleans, Louisiana, oder die US 5,082,571 A verwiesen.

Die verbrauchte Ablauge kann in derartigen Verfahren auf den gewünschten Reaktionsdruck gebracht und im Gegenstrom mit der oxidierten Ablauge angewärmt werden. Die erwärmte verbrauchte Ablauge kann anschließend unter Zufuhr von Sauerstoff in einen Oxidationsreaktor geführt und oxidiert werden. Der zur Reaktion benötigte Sauerstoff wird dabei entweder in Form von Luft oder als reiner Sauerstoff zugefügt. Eine zusätzliche, in anderen Verfahrensvarianten auch die ausschließliche, Anwärmung der verbrauchten Ablauge kann durch Einleitung von heißem Dampf in den Oxidationsreaktor vorgenommen werden.

Nach einer typischen Verweildauer von ca. einer Stunde (abhängig von der gewählten Temperatur und dem gewählten Druck) wird die oxidierte Ablauge mit dem zugehörigen Abgas über einen Wärmetauscher unter Erwärmung der verbrauchten Ablauge abgekühlt. Nach einer Druckkontrolle wird in einem anschließenden Abscheidebehälter das Abgas von der Flüssigkeit getrennt. Die flüssige oxidierte Ablauge kann danach unter optionaler Einstellung des pH-Werts (Neutralisation) in ein Verfahren zur biologischen Abwasseraufbereitung geführt werden.

Weitere Verfahren und Verfahrensvarianten sind aus der DE 10 2006 030 855 A1, der US 4,350,599 A und dem Artikel von C.E. Ellis, "Wet Air Oxidation of Refinery Spent Caustic", Environmental Progress, Band 17, Nr.1, 1998, Seiten 28-30 beschrieben.

Die Oxidation der schwefelhaltigen Verbindungen in der verbrauchten Ablauge erfolgt normalerweise in zwei unterschiedlichen Schritten. Bei der Oxidation von Sulfiden entstehen parallel Sulfit, Sulfat und Thiosulfat. Während Sulfit sehr schnell zu Sulfat weiteroxidiert wird, ist die Weiterreaktion von Thiosulfat vergleichsweise langsam. Die wesentlichen Reaktionen sind dabei folgende:

2 Na₂S + 2 O₂ + H₂O ⇄ Na₂S₂O₃ + 2 NaOH (1)

Na₂S₂O₃ + 2 NaOH ⇄ 2 Na₂SO₄ + H₂O (2)

Stand der Technik bei der Ablaugeoxidation sind ein Betriebsdruck von 6 bis 40 bar und eine Betriebstemperatur bis über 200 °C, beispi elsweise bis 210 °C. Je höher die Temperatur in Reaktor gewählt wird, desto höher muss der Druck eingestellt werden, da der Dampfdruck stark mit der Temperatur steigt. Die für einen weitgehenden Umsatz erforderliche Verweilzeit im Reaktor sinkt von größenordnungsmäßig 12 Stunden bei 6 bar auf 10 % der genannten Verweilzeit bei 30 bar.

Nach Stand der Technik wird die Ablauge in den Oxidationsreaktor aufgegeben. Ein Sauerstoffträger, in der Regel Luft, wird an beliebiger Stelle, meist vor dem eigentlichen Reaktor, mit der Lauge gemischt. Die Ablauge oder das Ablauge-Sauerstoffträger-Gemisch kann in einem Wärmetauscher vorgewärmt werden.

Gemäß dem Stand der Technik kann die Ablauge also vorgewärmt in den Oxidationsreaktor aufgegeben werden. Dies ist jedoch nicht zwingend erforderlich. Eine weitere Anwärmung (oder die einzige Anwärmung) erfolgt häufig mittels einer Dampfzugabe, die entweder in die zulaufende Ablauge oder direkt in den Reaktor erfolgen kann, sowie allgemein auch durch die Reaktionsenthalpie bzw. Exothermie der Oxidationsreaktionen. Wie erwähnt, kann in entsprechenden Verfahren auch eine Vorwärmung der Ablauge zum Reaktor gegen das Produkt aus dem Reaktor durchgeführt werden.

Da sich der Druck der Gasphase aus dem Dampfdruck und dem Druck der Oxidationsluft addiert und der Druck des zuströmenden Dampfes mindestens so groß wie der Reaktordruck sein muss, kommt für die erwähnte Dampfzugabe vor allem überhitzter Dampf in Frage. Dieser kondensiert partiell und liefert auf diese Weise die zusätzliche Wärme.

Ein für die Ablaugeoxidation verwendeter Oxidationsreaktor ist gemäß dem Stand der Technik derart aufgebaut, so dass sich eine gerichtete Strömung im Reaktor ausbildet und dadurch eine größere Reaktionsgeschwindigkeit und ein höherer Umsatz möglich sind. Hierzu können Einbauten in der Form von gelochten Böden verwendet werden.

Verfahren der zuvor erläuterten Art sind bspw. aus der DE 10 2010 049 445 A1, bei der ein Druck von mehr als 60 bar in einem entsprechenden Reaktionsreaktor eingesetzt wird, sowie aus der die DE 10 2006 030 855 A1 bekannt.

Reaktoren zur Ablaugeoxidation sind wegen der extremen Beanspruchungen aus hochwertigen Materialien wie Nickelbasislegierungen oder Nickel gefertigt. Auch derartige Materialien können jedoch durch hohe Sulfidkonzentrationen bei erhöhten Temperaturen angegriffen werden.

Die erwähnte Dampfzugabe in den Oxidationsreaktor erfolgt typischerweise über eine oder mehrere Düsen oder Lanzenkonstruktionen. Die Verteilung des Dampfes soll dabei möglichst gleichmäßig über die Fläche des Reaktors erfolgen, da der Oxidationsreaktor, wie erwähnt, typischerweise in einer Richtung durchströmt und die Quervermischung dadurch limitiert wird. Eine entsprechende Dampfzugabe kann, wie nachfolgend erläutert, in herkömmlichen Verfahren und Anlagen nicht oder nur in geringem Umfang gesteuert werden.

Gemäß GB 1 475 452 A wird Schlamm durch Erhitzen mit zuvor behandeltem Schlamm erwärmt und einer mit Dampf beaufschlagten Oxidationskammer eines Reaktors zugeführt, der in die Oxidationskammer und eine Wärmekonzentrationskammer unterteilt ist.

In WO 2011/002138 A1 offenbart ist ein Verfahren zur Behandlung von Natronlauge, umfassend die Neutralisierung der Natronlauge, die durch einen Ölraffinationsprozess erzeugt wurde, unter Verwendung von Schwefelsäure, und die Nassluftoxidation der neutralisierten Natronlauge.

Die Aufgabe der vorliegenden Erfindung ist es, ein Verfahren zur Nassoxidation einer Ablauge anzugeben, das es ermöglicht, insbesondere bei einem Betriebsdruck von 20 bis 40 bar und minimaler Verweilzeit eine optimale Oxidation der Schwefelbestandteile der Ablauge zu erreichen. Gleichzeitig soll der Prozess über einen weiteren Betriebsbereich steuerbar sein, insbesondere unter Einsatz sehr unterschiedlicher Dampfmengen. In dem Verfahren soll die Spitzenbetriebstemperatur verringert werden, um den korrosiven Angriff auf das Reaktormaterial, der vor allem von der Temperatur abhängig ist, zu minimieren. Aufgabe der vorliegenden Erfindung ist ferner, eine entsprechend betreibbare Anlage bereitzustellen.

### Offenbarung der Erfindung

Vor diesem Hintergrund schlägt die vorliegende Erfindung ein Verfahren zur Behandlung einer Ablauge einer Laugewäsche unter Verwendung eines Oxidationsreaktors und eine entsprechende Anlage sowie einen entsprechenden Oxidationsreaktor mit den Merkmalen der jeweiligen unabhängigen Patentansprüche vor. Ausgestaltungen sind Gegenstand der abhängigen Patentansprüche sowie der nachfolgenden Beschreibung.

### Vorteile der Erfindung

Die vorliegende Erfindung beruht auf der Erkenntnis, dass sich durch die Verwendung eines wie nachfolgend ausführlich erläutert ausgestalteten Oxidationsreaktors in der angegebenen Weise die zuvor erläuterten Probleme überwinden lassen.

Die vorliegende Erfindung schlägt dabei ein Verfahren zur Behandlung einer sulfidhaltigen Ablauge aus einer Laugewäsche vor, bei dem die Ablauge und Sauerstoff oder die Ablauge und ein sauerstoffhaltiges Gasgemisch, beispielsweise Luft, einem Oxidationsreaktor zugeführt und in diesem einer Nassoxidation unterworfen werden. In den Oxidationsreaktor wird Dampf eingespeist.

Durch den Einsatz eines entsprechenden Verfahrens werden die zuvor erläuterten Vorteile erzielt. Wird nachfolgend auf Merkmale und Vorteile von Ausgestaltungen erfindungsgemäßer Verfahren Bezug genommen, betreffend diese erfindungsgemäße Anlagen bzw. Oxidationsreaktoren mit entsprechenden Dampfeinspeisevorrichtungen in gleicher Weise. Die Merkmale erfindungsgemäßer Verfahren und Vorrichtungen sowie entsprechender Varianten werden also gemeinsam erläutert.

Erfindungsgemäß wird hierbei ein Oxidationsreaktor mit einer Anzahl von Kammern verwendet, von welchen eine erste Kammer in größeres Volumen als eine zweite Kammer aufweist. Die Ablauge und der Sauerstoff oder die Ablauge und das sauerstoffhaltige Gasgemisch werden der ersten Kammer zugeführt. Aus der ersten Kammer abströmendes Fluid wird in die zweite Kammer überführt. Eine Dampfmenge und/oder eine Dampftemperatur des in den Oxidationsreaktor eingespeisten Dampfs wird mit einer Regeleinrichtung geregelt, und der in dem Oxidationsreaktor eingespeiste Dampf wird im Rahmen der vorliegenden Erfindung zumindest teilweise, insbesondere vollständig, in die erste Kammer und in die zweite Kammer eingespeist.

Die Anzahl der in dem erfindungsgemäß eingesetzten Oxidationsreaktor verwendeten Kammern ist grundsätzlich nicht begrenzt. Es sind jedoch typischerweise mindestens vier Kammern vorgesehen, darunter die erwähnte erste und zweite Kammer. Die Kammern sind in einem entsprechenden Oxidationsreaktor vorzugsweise seriell hintereinander angeordnet. Typischerweise wird ein entsprechender Oxidationsreaktor dabei stehend angeordnet, wobei die genannten Kammern übereinander liegen. Der Oxidationsreaktor wird typischerweise von unten nach oben mit Fluid durchströmt, wobei die erwähnte erste Kammer die unterste Kammer und die erwähnte zweite Kammer die auf die unterste Kammer folgende, oberhalb der untersten Kammer angeordnete Kammer darstellt.

Die genannten Kammern sind typischerweise mittels geeigneten Trenneinrichtungen voneinander abgegrenzt, beispielsweise durch Siebböden oder durch Böden mit Düsenventilen zur Reduzierung der Rückströmung und damit der Rückvermischung. voneinander getrennt. Die Dampfeinspeisung erfolgt in der nachfolgend erläuterten Weise, d.h. insbesondere unter Verwendung spezifisch ausgebildeter Dampfeinspeiseeinrichtungen, die eine Variation der eingespeisten Dampfmengen in breitem Umfang zulassen.

Die Erfindung umfasst, wie erwähnt, dass der in den Oxidationsreaktor eingespeiste Dampf zumindest teilweise in die erste Kammer und in die zweite Kammer eingespeist wird. Die Dampfzuführung erfolgt, mit anderen Worten, also vorteilhafterweise parallel in die erste und die zweite Kammer. Eine "parallele" Einspeisung umfasst dabei nicht notwendigerweise die Einspeisung gleicher, jedoch jeweils gewisser, Dampfmengen in die erste und in die zweite Kammer.

Mit anderen Worten umfasst die vorliegende Erfindung die Verwendung einer eintrittsnahmen Kammer, der erwähnten ersten Kammer, und einer in Strömungsrichtung stromab hiervon angeordneten zweiten Kammer in einem entsprechenden Reaktor. Die eintrittsnahe Kammer, also die erste Kammer, und die darauffolgende Kammer, also die zweite Kammer, sind mit einer Dampflanze bzw. einer anderen Einspeisevorrichtung für Dampf versehen.

Die eintrittsnahe (erste) Kammer ist im Rahmen der vorliegenden Erfindung im Vergleich zu der auf sie folgenden (zweiten) Kammer, und insbesondere im Vergleich zu sämtlichen anderen Kammern des Oxidationsreaktors, vergrößert, wodurch in dieser Kammer vergleichsweise hohe Umsätze erzielt werden können. Das Volumen der ersten Kammer beträgt insbesondere das 1,1-fache, 1,5-fache, 2-fache, 3-fache oder mehr als 3-fache des Volumens der zweiten Kammer. Auf diese Weise kann durch den Einsatz des erfindungsgemäß ausgestalteten Oxidationsreaktors das Auftreten eingangsnaher hoher Eduktkonzentrationen verhindert werden. Mit anderen Worten wird in der großen, eintrittsnahen ersten Kammer eine Konzentration des Sulfids, das über die Ablauge in den Oxidationsreaktor eingebracht wird, verringert. Es erfolgt, mit anderen Worten, eine Verdünnung in der ersten Kammer. Die niedrigere Sulfidkonzentration in dieser Kammer hat im Vergleich zur hohen Konzentration in der eingespeisten Ablauge den Vorteil, dass der korrosive Angriff auf das Reaktormaterial geringer ausfällt. Dies führt insbesondere in Zusammenhang mit der erwähnten Regelung der Dampfmenge und/oder Dampftemperatur des in den Oxidationsreaktor eingespeisten Dampfs zu einer Verringerung des korrosiven Angriffs auf das Reaktormaterial.

Dem Oxidationsreaktor wird im Rahmen der vorliegenden Erfindung vorteilhafterweise Sattdampf oder um höchstens 5 bis 10 °C überhitzter Dampf zugeführt. Die Dampftemperatur des in den Oxidationsreaktor eingespeisten Dampfs wird dabei vorteilhafterweise durch Einmischen von Wasser im erhitzten Dampf eingestellt. Mit anderen Worten wird im Rahmen der vorliegenden Erfindung vorteilhafterweise eine Einrichtung verwendet, der überhitzter Dampf einerseits und Wasser andererseits zugeführt werden. Hierbei können insbesondere ein sogenannter Enthitzer bzw. Desuperheater und ein sich anschließender Mischer verwendet werden. Durch eine Zudosierung des überhitzten Dampfs zu dem Desuperheater einerseits und des Wassers zu dem Desuperheater andererseits kann eine Mischtemperatur erhalten werden, die in dem zuvor erwähnten Bereich liegt. Gleichzeitig kann durch eine Einstellung der Menge des Sattdampfs oder des überhitzten Dampfs und des Wassers im Rahmen der Erfindung, die auf Grundlage einer Einstellung mittels der erwähnten Regeleinrichtung erfolgt, die sich ergebende Dampfmenge eingestellt werden.

Im Rahmen der vorliegenden Erfindung erfolgt die Regelung vorteilhafterweise derart, dass die Dampfmenge und/oder die Dampftemperatur des in den Oxidationsreaktor eingespeisten Dampfs auf Grundlage einer in der ersten Kammer und/oder der zweiten Kammer erfassten Temperatur und auf Grundlage einer erfassten Temperatur eines aus dem Reaktor ausströmenden Fluids geregelt wird. Die Temperaturregelung umfasst daher, mit anderen Worten, im Rahmen der Erfindung vorteilhafterweise, dass eine Temperaturmessung der jeweils mit Dampfeinspeiseeinrichtungen ausgestatteten Kammern des Oxidationsreaktors erfolgt. Auf dieser Grundlage wird bzw. werden die Mengen an zugeführtem Dampf geregelt. Gleichzeitig wird eine Austrittstemperatur aus dem Oxidationsreaktor eingestellt bzw. erfasst.

Vorteilhafterweise kommt im Rahmen der vorliegenden Erfindung dabei eine Regelkaskade zum Einsatz, die umfasst, dass die Temperatur der untersten Kammer, also der erwähnten ersten Kammer, auf einen Sollwert eingestellt wird. Gleichzeitig wird eine Maximaltemperatur vorgegeben, die in dieser ersten Kammer nicht überschritten werden kann bzw. darf. Der für die Temperatur in der ersten Kammer verwendete Sollwert wird dabei im Rahmen der erfindungsgemäß vorgeschlagenen Regelung auf Grundlage der Austrittstemperatur, also auf Grundlage der erfassten Temperatur des aus dem Reaktor ausströmenden Fluids, vorgegeben. Hierdurch kann im Rahmen der vorliegenden Erfindung die Temperatur am Kopf eines entsprechenden Oxidationsreaktors mit den Temperaturen in den genannten Kammern abgeglichen werden. Die gemessene Temperatur in den Kammern begrenzt jeweils die in diese Kammern zugeführte Menge an Dampf.

Durch die Verwendung der erfindungsgemäß vorgeschlagenen Lösung kann ein breiter Betriebsbereich von idealerweise 0 bis 100% Last, in der Praxis typischerweise von 5 bis 100% Last, ermöglicht werden. Die "Last" entspricht dabei insbesondere einer Dampfmenge. Durch die Verwendung der erfindungsgemäß eingesetzten Regelung ist keine Limitierung des Betriebs durch zu hohe Prozesstemperaturen mehr möglich.

Mit anderen Worten umfasst die erfindungsgemäß vorgeschlagene Regelung, einen Temperatursollwert und eine Maximaltemperatur in der ersten Kammer und/oder der zweiten Kammer vorzugeben. Aufgrund der Vorgabe, die Temperatur in der ersten Kammer, also der untersten Kammer, mit der höchsten Konzentration an Sulfid zu senken, würde die Temperatur in der zweiten Kammer ggf. auf einen geringeren Wert als erwünscht absinken. Daher wird die Dampfeinspeisung auch in die zweite Kammer vorgenommen. Auf diese Weise kann diese gezielt erwärmt werden und die Reaktionsbedingungen in dieser zweiten Kammer können vorteilhaft eingestellt werden.

Die Dampfzuspeisung verteilt sich also, wie erwähnt, vorteilhafterweise auf die beiden Kammern bzw. dort vorgesehene Dampfeinspeisungsvorrichtungen. Die Dampfzuspeisung zu beiden Kammern ist dabei vorteilhafterweise separat geregelt. Im Rahmen der erfindungsgemäß eingesetzten Regelung werden daher vorteilhafterweise die erste Kammer und die zweite Kammer jeweils mit einem unabhängigen Temperatursensor ausgestattet und die Regelung jeweils in voneinander unabhängigen Regelkreisen vorgenommen. Vorteilhafterweise wird die Dampfmenge, die in die untere Kammer, also die erste Kammer, zugespeist wird, auf die Temperatur des Temperaturelements in der untersten, also der ersten Kammer, geregelt. Die Regelung in der zweiten Kammer wird kaskadiert, wobei die Temperatur am Reaktoraustritt, berücksichtigt wird. Vorteilhafterweise wird also der jeweilige Sollwert im Rahmen der vorliegenden Erfindung auf Grundlage der Temperatur des aus dem Reaktor ausströmenden Fluids vorgegeben.

Im Rahmen der vorliegenden Erfindung ist das Volumen der ersten Kammer vorteilhafterweise größer als ein mittleres Volumen aller Kammern des Oxidationsreaktors, wobei insbesondere die oben erläuterten Faktoren gelten. Alternativ oder zusätzlich kann die Größe der ersten Kammer auch in Bezug auf das Gesamtvolumen des Reaktors definiert werden. Vorteilhafterweise beträgt das Volumen der ersten Kammer dabei wenigstens ein Drittel und höchstens zwei Drittel eines Gesamtvolumens aller Kammern. Mit anderen Worten ist, wie bereits erläutert, die eintrittsnahe Kammer vergrößert, die übrigen Kammern sind hingegen kleiner als die erste Kammer ausgebildet. Die kleineren Kammern, die insbesondere der zweiten Kammer nachgeordnet sind, besitzen die Aufgabe, die Verweilzeitverteilung zu verkleinern, um den Umsatz in dem Oxidationsreaktor insgesamt zu optimieren.

Wie erwähnt, kann im Rahmen der vorliegenden Erfindung vorteilhafterweise die Dampfmenge des in den Oxidationsreaktor eingespeisten Dampfs in einem Bereich von 5 bis 100% geregelt werden. Hiermit ist gemeint, dass eine Dampfmenge des eingespeisten Dampfs zu einem ersten Zeitpunkt 5% bis 100% der zu einem zweiten Zeitpunkt eingespeisten Dampfmenge entsprechen kann bzw. ein entsprechender Sollwert mittels der Regelung vorgegeben wird.

Im Rahmen der vorliegenden Erfindung wird der Dampf vorteilhafterweise zumindest teilweise mittels einer Dampfeinspeisevorrichtung in den Oxidationsreaktor eingeleitet, die einen oder mehrere zylindrische Abschnitte mit jeweils einer Mittelachse und jeweils einer Wandung aufweist, wobei die Mittelachse lotrecht ausgerichtet ist oder wird, in der Wandung mehrere Gruppen von Öffnungen ausgebildet sind, jede der Gruppen mehrere der Öffnungen umfasst, und die mehreren Öffnungen jeder der Gruppen in einer oder mehreren Ebenen angeordnet sind, die jeweils senkrecht zur Mittelachse ausgerichtet ist oder sind. Im Rahmen der vorliegenden Erfindung kann insbesondere je die erste und die zweite Kammer jeweils mit einer entsprechenden Dampfeinspeisevorrichtung versehen sein. Mehrere zylindrische Abschnitte können insbesondere in größeren Reaktoren vorgesehen sein. Der Übersichtlichkeit halber ist nachfolgend von "einem" zylindrischen Abschnitt die Rede, die Erläuterungen betreffen jedoch auch den Fall, dass mehrere zylindrische Abschnitte vorgesehen sind.

Durch die Konstruktion in herkömmlichen Verfahren eingesetzter Dampflanzen ist eine Minimierung der Dampfmenge schwierig bis unmöglich. Im Optimalfall kann die geringste eingespeiste Dampfmenge minimal 40%, im Realfall eher minimal 60% der Normallast, jedoch nicht weniger, betragen. Dies ist darauf zurückzuführen, dass durch eine ungleichmäßige Anströmung aller Lanzenlöcher Dampfschläge durch beispielsweise lokale Einkondensation und eine Fehlverteilung des Dampfes zu erwarten sind. Die erwähnte Dampfeinspeisung über die soeben erwähnte Dampfeinspeisevorrichtung ermöglicht hingegen eine besonders gute Regelbarkeit der eingespeisten Dampfmenge.

Im Rahmen der vorliegenden Erfindung wird im Gegensatz zu einem horizontalen, in irgendeiner bekannten Art mit einer oder mehreren Lochreihen versehenen Rohrleitung Dampf vorteilhafterweise ausschließlich über den erwähnten zylindrischen Abschnitt einer oder mehrerer entsprechender Dampfeinspeisevorrichtungen in den Reaktor eingeleitet und damit in die Ablauge bzw. in ein Zweiphasengemisch aus Ablauge und Luft eingebracht. Der zylindrische Abschnitt kann dabei als "Zapfen" ausgebildet sein, der, insbesondere mittig, in einem entsprechenden Reaktor senkrecht angeordnet ist. Ein entsprechender Oxidationsreaktor ist typischerweise seinerseits zumindest teilweise zylindrisch ausgebildet. In diesem Fall fallen insbesondere die Mittelachse des zylindrischen Abschnitts der Dampfeinspeisevorrichtung und eine Mittelachse des Oxidationsreaktors bzw. dessen zylindrischen Abschnitts zusammen.

Dadurch, dass der zylindrische Abschnitt senkrecht angeordnet ist und in diesem mehrere Gruppen von Öffnungen vorgesehen sind, die in mehreren Ebenen übereinander angeordnet sind, kann sich in dem zylindrischen Abschnitt durch eine Kondensation des Dampfs Kondensat ansammeln, das einen Kondensatstand entsprechend den Druckverhältnissen in dem zylindrischen Abschnitt ausbilden kann. Mit anderen Worten wird in dem erfindungsgemäßen Verfahren Dampf in der Dampfeinspeisevorrichtung bzw. in deren zylindrischem Abschnitt zur Kondensation gebracht, wobei sich in dem zylindrischen Abschnitt ein Kondensatstand ausbildet, der insbesondere vom Druck des eingespeisten Dampfs abhängt.

Bei geringen Dampfvolumina füllt sich dabei der zylindrische Abschnitt vergleichsweise stark mit Kondensat und der Dampf durchströmt nur jene Öffnungen, die in weiter oben angeordneten Ebenen ausgebildet sind. Auf diese Weise kann sichergestellt werden, dass die durchströmten Öffnungen jeweils optimal mit Dampf beaufschlagt werden und sich optimale Strömungsverhältnisse einstellen. Im Gegensatz werden in herkömmlichen Anordnungen stets sämtliche Öffnungen mit Dampf beaufschlagt, die einzelnen Öffnungen für sich betrachtet aber schwächer durchströmt. Durch ein erfindungsgemäß vorgeschlagenes Verfahren ergibt sich daher eine gleichmäßige Verteilung des Dampfs mit geringer Neigung zu Dampfschlägen und Pumpen. Bei höherer Last, d.h. bei höheren Dampfvolumen, und damit einem höheren Druck in dem zylindrischen Abschnitt, wird der zylindrische Abschnitt immer weiter von Kondensat entleert und weitere Öffnungen, die in tieferliegenden Ebenen angeordnet sind, werden mit Dampf durchströmt, bis Volllast erreicht ist.

Ist im Rahmen der vorliegenden Anmeldung davon die Rede, dass jede der Gruppen mehrere der Öffnungen umfasst und die mehreren Öffnungen jeder der Gruppen in einer oder mehreren Ebenen angeordnet sind, sei hierunter verstanden, dass jeweils unterschiedliche Gruppen jeweils Öffnungen aufweisen können, die oberhalb und unterhalb einer Bezugsebene angeordnet sein können. Auf diese Weise kann auch bei leichtem Schrägstand eines entsprechenden Reaktors oder bei Turbulenzen des Kondensatstands in dem zylindrischen Abschnitt, insbesondere aufgrund der Dampfeinspeisung, eine ausreichende Durchströmung sichergestellt werden. Im einfachsten Fall, d.h. wenn die mehreren Öffnungen jeder der Gruppen jeweils in einer Ebene angeordnet sind, sind dabei mehrere Lochreihen übereinander angeordnet, wobei die Öffnungen unterschiedlicher Lochreihen vorteilhafterweise jeweils auf Lücke stehen, damit eine besonders gute Dampfdurchmischung sichergestellt werden kann.

Vorteilhafterweise sind in jeder der Ebenen die hier jeweiligen Öffnungen äquidistant um einen durch eine Schnittlinie der jeweiligen Ebene mit der Wandung definierten Umfang verteilt angeordnet. Mit anderen Worten schließen jeweils Radiallinien, die von der Mittelachse in der entsprechenden Ebene ausgehen und durch die jeweiligen Öffnungen verlaufen, identische Winkel ein. Auf diese Weise, kann, insbesondere bei einer zylindrischen Ausbildung des Oxidationsreaktors, eine gleichmäßige Durchmischung sichergestellt werden.

Vorteilhafterweise sind in der Dampfeinspeisevorrichtung, die in einem entsprechenden Verfahren verwendet wird, die Öffnungen jeder der Gruppen in mehreren Ebenen angeordnet und eine Maximaldistanz der Ebenen, in der die Öffnungen einer der Gruppen liegen, ist geringer als eine Minimaldistanz der Ebenen, in der die Öffnungen zweier unterschiedlicher Gruppen liegen. Wie bereits erwähnt, müssen also die Öffnung jeder der Gruppen nicht in genau einer Ebene liegen, sondern können auch in unterschiedlichen Ebenen angeordnet sein, die jedoch näher beieinander liegen als die Ebenen zweier unterschiedlicher Gruppen.

Vorteilhafterweise sind in jeder der Ebenen zwei, drei, vier oder mehr der Öffnungen angeordnet und dabei, wie erwähnt, äquidistant entlang der Wandung um den Umfang des zylindrischen Abschnitts verteilt. Hieraus ergeben sich Zwischenwinkel zwischen den Öffnungen von 180°, 120°bzw. 90°. Die Anzahl d er Öffnungen pro Ebene kann dabei auch unterschiedlich sein. Insbesondere kann in einer obersten Ebene die Anzahl von Öffnungen minimiert sein, so dass ein möglichst kleiner Unterlastbetrieb gewährleistet werden kann.

Vorteilhafterweise weist der zylindrische Abschnitt der Dampfeinspeisevorrichtung ein erstes Ende und ein zweites Ende auf und ist an dem ersten Ende durch eine Abschlussfläche vorschlossen. Das erste Ende weist dabei nach unten und stellt sicher, dass sich das Kondensat in den zylindrischen Abschnitt ansammeln kann. In der Abschlussfläche kann dabei insbesondere zumindest eine weitere Öffnung ausgebildet sein, die gewährleistet, dass Kondensat aus den zylindrischen Abschnitt ablaufen kann. Es können auch mehrere Öffnungen in der Abschlussfläche angeordnet sein, deren Größe und Anzahl sich insbesondere nach der jeweils zu bearbeiteten bzw. einzuspeisenden Dampfmenge richten kann.

Vorteilhafterweise ist der zylindrische Abschnitt mit dem zweiten Ende mit einer Dampfzuleitung und/oder Halterung verbunden, die sich von dem zweiten Ende des zylindrischen Abschnitts zu einer Wandlung des verwendeten Oxidationsreaktors erstreckt. Ist dabei eine Dampfzuleitung vorgesehen, kann diese insbesondre zylindrisch ausgebildet sein und einen gleichen oder unterschiedlichen Durchmesser wie der zylindrische Abschnitt der Dampfeinspeisevorrichtung aufweisen. Um eine einfache Fertigung sicherzustellen, sind die Durchmesser vorteilhafterweise identisch.

Vorteilhafterweise sind die Öffnungen in dem zylindrischen Abschnitt derart angeordnet, dass aus diesem Dampf jeweils in einer Ausströmrichtung ausströmt, die unterschiedlich zu einer Richtung ist, in der sich die Dampfzuleitung und/oder die Halterungen in einer Aufsicht aus Richtung der Mittelachse erstreckt. Mit anderen Worten wird bzw. werden die Öffnungen jeweils derart angeordnet, dass durch diesen ausströmender Dampf vorteilhafterweise nicht auf die Zuleitung und/oder Halterung gerichtet ist, um eine möglichst freie Ausströmung sicherzustellen.

In dem erfindungsgemäßen Verfahren werden vorteilhafterweise die Ablauge und der Sauerstoff oder das sauerstoffhaltige Gasgemisch vorgemischt, bevor sie dem Oxidationsreaktor zugeführt werden. Die Ablauge und der Sauerstoff oder das sauerstoffhaltige Gasgemisch werden dabei vorteilhafterweise bei Umgebungstemperatur dem Oxidationsreaktor zugeführt und erst in diesem aufgeheizt. Auf diese Weise lässt sich insbesondere in der ersten Kammer eine Temperatur genau einstellen und regeln, um die zuvor erläuterten Vorteile des verringerten korrosiven Angriffs auf den Reaktor zu erzielen.

Der Oxidationsreaktor insgesamt wird im Rahmen der vorliegenden Erfindung vorteilhafterweise auf einem Druckniveau von 20 bis 50 bar, insbesondere von 30 bis 40 bar und auf einem Temperaturniveau von 150 bis 220 °C, insbesondere von 185 bis 210 °C betrieben. Durch die erfindungsgemäß vorgese hene Ausgestaltung des Oxidationsreaktors werden dabei korrosive Angriffe verringert.

Die vorliegende Erfindung erstreckt sich auch auf eine Anlage zur Behandlung einer sulfidhaltigen Ablauge aus einer Laugewäsche, zu deren Merkmalen auf den jeweiligen unabhängigen Patentanspruch ausdrücklich verwiesen wird. Entsprechendes gilt auch für den erfindungsgemäß vorgeschlagenen Oxidationsreaktor Vorteilhafterweise ist eine derartige Anlage bzw. ein entsprechender Oxidationsreaktor zur Durchführung eines Verfahrens eingerichtet, wie es zuvor in unterschiedlichen Ausgestaltungen erläutert wurde, und eine entsprechende Anlage weist hierzu entsprechend ausgebildete Mittel auf. Zu entsprechenden Merkmalen und Vorteilen wird daher auf die obigen Erläuterungen ausdrücklich verwiesen.

Die Erfindung wird nachfolgend unter Bezugnahme auf die beigefügten Zeichnungen näher erläutert, die Aspekte der vorliegenden Erfindung veranschaulichen.

### Kurze Beschreibung der Zeichnungen

Figur 1 zeigt eine Anlage zur Behandlung einer Ablauge gemäß einer Ausführungsform der Erfindung in vereinfachter Darstellung.
Figur 2 veranschaulicht einen Oxidationsreaktor zum Einsatz in einer Anlage gemäß einer Ausführungsform der Erfindung in schematischer Teildarstellung.
Figur 3A veranschaulicht eine Dampfeinspeisevorrichtung zum Einsatz in einer Anlage gemäß einer Ausführungsform der Erfindung in einer ersten Ausgestaltung.
Figur 3B veranschaulicht eine Dampfeinspeisevorrichtung zum Einsatz in einer Anlage gemäß einer Ausführungsform der vorliegenden Erfindung in einer zweiten Ausgestaltung.

### Ausführliche Beschreibung der Zeichnungen

In den Figuren sind aneinander funktional oder baulich entsprechende Elemente jeweils mit identischen Bezugszeichen angegeben. Diese werden der Übersichtlichkeit halber nicht wiederholt erläutert.

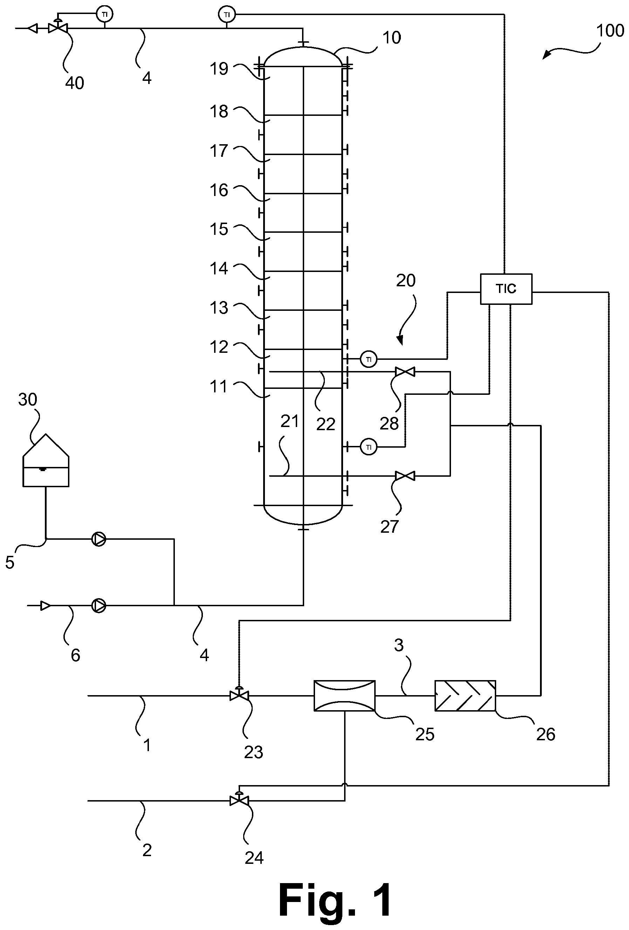

In Figur 1 ist eine Anlage zur Behandlung einer Ablauge gemäß einer besonders bevorzugten Ausführungsform der Erfindung schematisch veranschaulicht und insgesamt mit 100 bezeichnet.

Zentrale Komponente der in Figur 1 veranschaulichten Anlage 100 ist ein Oxidationsreaktor 10. Dieser weist im dargestellten Beispiel insgesamt neun Reaktorkammern 11 bis 19, mindestens jedoch vier Reaktorkammern, auf.

Eine im dargestellten Beispiel zuunterst angeordnete, eintrittsnahe Kammer 11 und optional die darauf folgende Kammer 12 sind jeweils mit einem Dampfeinspeiser 21 und 22 versehen, beispielsweise einer Dampflanze oder einer in die jeweilige Kammer 11, 12 ragenden Dampfkammer. Die eintrittsnahe Kammer 11 ist im Vergleich zu den anderen Kammern 12 bis 19 vergrößert, mit dem Ziel, relativ hohe Umsätze in dieser Kammer zu erzielen und auf diese Weise das Auftreten eingangsnaher hoher Eduktkonzentrationen zu verhindern. Die vergrößerte Kammer 11 ist größer als das mittlere Kammervolumen und umfasst typischerweise mehr als ein Drittel des gesamten Reaktorvolumens und typischerweise weniger als zwei Drittel hiervon. Die kleineren Kammern 12 bis 19 darüber haben die Aufgabe, die Verweilzeitverteilung zu verkleinern, um den Umsatz zu optimieren.

Die Dampfeinspeiser 21, 22 sind Teil eines Dampfsystems 20, das auf Grundlage einer Temperaturaufnehmerregelung TIC steht, an die mehrere Temperaturaufnehmer TI, die an den Kammern 11 und 12 sowie einem Ausgang des Oxidationsreaktors 10 angeordnet sind, angebunden sind. Die Temperaturaufnehmerregelung TIC regelt zwei Ventile 23, 24, die stromauf eines Enthitzers bzw. Desuperheaters 25 angeordnet sind, und mittels derer ein Zufluss von überhitztem Dampf 1 bzw. Kesselspeisewasser 2 zu dem Desuperheater 25 eingestellt wird. Aus dem Desuperheater 25 strömendes Fluid 3 wird in einem Mischer 26 gemischt und anschließend über Ventile 27 und 28 auf die Kammern 11, 12 bzw. die Dampfeinspeiser 21, 22 verteilt.

Die große eintrittsnahe Kammer 21 führt zu einer niedrigeren Konzentration des Sulfids. Die niedrigere Sulfidkonzentration in dieser Kammer 21 im Vergleich zur hohen Eintrittskonzentration hat den Vorteil, dass der korrosive Angriff auf das Reaktormaterial gemeinsam mit einer mittels des Dampfsystems 20 geregelten Betriebstemperatur geringer ausfällt.

Die Temperaturregelung mittels des Dampfsystems 20 erfolgt durch die Temperaturmessung der jeweils mit Dampfeinspeisern 21, 22 ausgestatteten Kammern 11, 12 und regelt die Menge(n) an zugeführtem Dampf. Gleichzeitig wird eine Austrittstemperatur eingestellt. Deshalb wird eine Regelkaskade verwendet. Die Temperatur am Kopf des Oxidationsreaktors 10 wird dabei mit den Temperaturen in den Kammern 11, 12 mit dem Dampfeinspeisern 21, 22 abgeglichen und die gemessene Temperatur in den Kammern 11, 12 mit dem Dampfeinspeisern 21, 22 limitiert die zugeführte Menge an Dampf. Mittels der Temperaturaufnehmerregelung wird die Temperatur der untersten Kammer 11 auf einen Sollwert eingestellt, wobei eine Maximaltemperatur nicht überschritten werden darf. Der Sollwert wird wiederum von einem zweiten Regler gestellt, der die Austrittstemperatur am Kopf des Oxidationsreaktors 10 regelt.

Dem Oxidationsreaktor 10 wird ein Einsatz 4 zugeführt, der typischerweise zweiphasig ist und aus Lauge 5, die einem Tank 30 entnommen wird, und aus Luft 6 gebildet wird. Der Einsatz 4 wird dem Oxidationsreator 10 im dargestellten Beispiel auf Umgebungstemperatur und bei 20 bis 40 bar zugeführt. Dem Oxidationsreaktor 10 wird ein typischerweise dreiphasiges Komponentengemisch 4 entnommen. Eine Strömung dieses Komponentengemischs aus dem Oxidationsreaktor 10 wird mittels eines Ventils 40 eingestellt, das ebenfalls temperaturgeregelt betrieben wird.

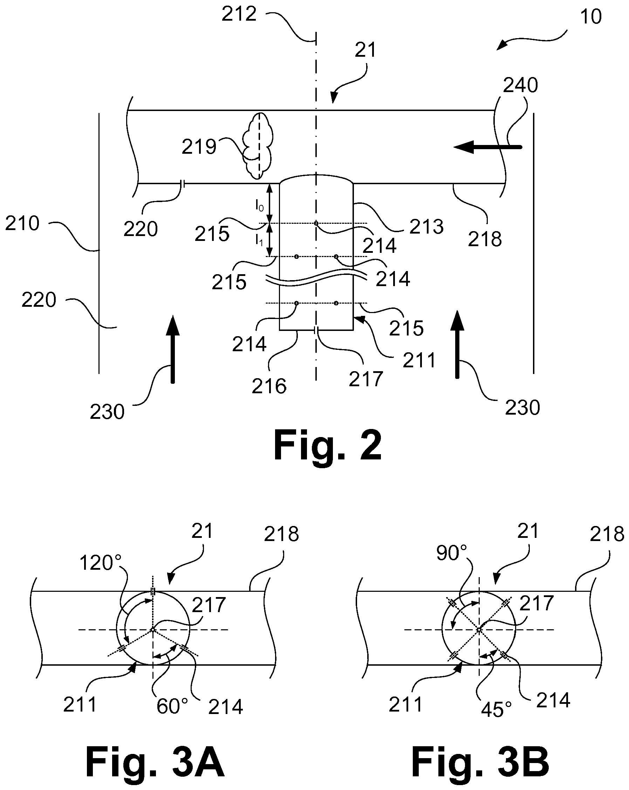

In Figur 2 ist ein Abschnitt eines Oxidationsreaktors zum Einsatz in einer Anlage gemäß einer Ausgestaltung der vorliegenden Erfindung stark vereinfacht schematisch veranschaulicht und insgesamt, wie in Figur 1, mit 10 bezeichnet. Der Oxidationsreaktor 10 weist eine Wandung 210 auf, die einen Innenraum 220 des Oxidationsreaktors 10 einschließt. In den Innenraum 220 kann eine Ablauge bzw. ein Ablauge-Luft-Gemisch aufgenommen und bspw. im Wesentlichen in Richtung hier jeweils mit 230 veranschaulichter Pfeile geführt werden.

Wie erwähnt, kann insbesondere die Oxidationsluft und die Ablauge vor der Einspeisung in den Oxidationsreaktor 10 erwärmt werden. Eine zusätzliche Erwärmung kann mittels eines Dampfstroms 240 erfolgen, die wie hier veranschaulicht über eine Dampfeinspeisevorrichtung 21 in den Oxidationsreaktor 100 bzw. in die in diesem aufgenommenen Ablauge eingeleitet wird. Die Dampfeinspeisevorrichtung 22, die in Figur 1 dargestellt ist, kann identisch ausgebildet sein.

Die Dampfeinspeisevorrichtung 10 umfasst dabei einen zylindrischen Abschnitt 211, der eine Mittelachse 212 aufweist, die insbesondere einer Mittelachse des Oxidationsreaktors 10 insgesamt entsprechen kann. Der zylindrische Abschnitt 211 umfasst eine Wandung 213. Die Mittelachse 212 ist lotrecht ausgerichtet. In der Wandung 213 sind mehrere Öffnungen 214 angeordnet, die nur teilweise mit Bezugszeichen versehen sind. Die Öffnungen 214 sind in mehreren Gruppen angeordnet, wobei jede der Gruppen mehrere der Öffnungen 214 umfasst und die mehreren Öffnungen jeder der Gruppen in einer oder mehreren Ebenen, die hier gestrichelt veranschaulicht wurden und mit 215 bezeichnet sind, angeordnet sind.

Die Ebenen 215 sind jeweils senkrecht zur Mittelachse 212 ausgerichtet. Mit anderen Worten schneidet die Mittelachse 212 die Ebenen 215 senkrecht. Auf diese Weise werden im Rahmen der vorliegenden Erfindung mehrere Reihen von Öffnungen 214 bzw. Lochreihen ausgebildet, die es ermöglichen, dass sich in dem zylindrischen Abschnitt 211 Kondensat anstaut und nur durch die freibleibenden Öffnungen 14 Dampf in den Innenraum 220 des Oxidationsreaktors 10 bzw. in die dort vorliegende Ablauge eingeleitet wird. Auf diese Weise kann ein entsprechender Oxidationsreaktor 10 optimiert betrieben werden, wie mehrfach zuvor erläutert.

Wie erläutert, sind dabei die Öffnungen 214 in den unterschiedlichen Ebenen 215 in gleicher oder unterschiedlicher Anzahl vorgesehen, wobei insbesondere in einer hier oben dargestellten Ebene 215 nur eine geringere Anzahl von Öffnungen vorgesehen sein kann, um eine Minimallast zu ermöglichen. Zu den Abständen I0 und I1 der einzelnen Ebenen 214 zueinander und in Bezug auf den zylindrischen Abschnitt 211 sei auf die obigen Erläuterungen ausdrücklich verwiesen.

An einem unteren Ende bzw. ersten Ende ist der zylindrische Abschnitt 211 von einer Abschlussfläche 216 verschlossen, in der zumindest eine weitere Öffnung 217 angeordnet ist. An einem entgegengesetzten zweiten Ende des zylindrischen Abschnitts 211 ist dieser an eine Dampfzuleitung 218 angebunden, die einen gleichen oder unterschiedlichen Durchmesser zu dem zylindrischen Abschnitt aufweisen kann. Die am nächsten zu der Dampfzuleitung 218 liegende Reihe von Öffnungen 214 weist dabei vorteilhafterweise geringste Anzahl von Öffnungen 214 auf. Ausbildung und Ausrichtung der jeweiligen Öffnungen 214 wurden zuvor ausführlich erläutert. Die Dampfzuleitung 218 ist an einem Ende von einem Verschluss verschlossen bzw. weist diese eine oder mehrere weitere Öffnungen 220 auf.

In Figur 3A ist die Dampfeinspeisevorrichtung 21, die bereits in Figur 2 als Teil des Oxidationsreaktors 100 veranschaulicht ist, in anderer Perspektive dargestellt, wobei hier eine Draufsicht entlang der Achse 212 gemäß Figur 2 von unten veranschaulicht ist. Wie hier dargestellt, sind die Öffnungen 214 dabei in den zylindrischen Abschnitt 211 derart angeordnet, dass eine durch diese definierte Ausströmrichtung für Dampf von einer Mittelachse der Dampfzuleitung 218 abweicht.

Sind dabei, wie in dem in Figur 3A dargestellten Beispiel gezeigt, in einer Ebene drei Öffnungen veranschaulicht, beträgt ein Zwischenwinkel zwischen diesen 120°und diese sind im dargestellten Winkel von 60°gegenübe r einer Senkrechten zur Mittelachse der Zuleitung 218 geneigt.

In Figur 3B sind die entsprechenden, bereits in Figur 3A dargestellten Verhältnisse für den Fall dargestellt, dass vier Öffnungen 214 in einer Ebene 215 eines entsprechenden zylindrischen Abschnitt 211 vorgesehen sind.

## Patentansprüche

1. Verfahren zur Behandlung einer sulfidhaltigen Ablauge aus einer Laugewäsche, bei dem die Ablauge und Sauerstoff oder ein sauerstoffhaltiges Gasgemisch einem Oxidationsreaktor (10) zugeführt und in diesem einer Nassoxidation unterworfen werden, wobei in den Oxidationsreaktor (10) Dampf eingespeist wird, **dadurch gekennzeichnet, dass** ein Oxidationsreaktor (10) mit einer Anzahl von Kammern (11-19) verwendet wird, von welchen eine erste Kammer (11) ein größeres Volumen als eine zweite Kammer (12) aufweist, wobei die Ablauge und der Sauerstoff oder das sauerstoffhaltige Gasgemisch der ersten Kammer (11) zugeführt wird, aus der ersten Kammer (11) abströmendes Fluid in die zweite Kammer (12) überführt wird, eine Dampfmenge und/oder Dampftemperatur des in den Oxidationsreaktor (10) eingespeisten Dampfs mit einer Regeleinrichtung (TIC) geregelt wird, und der in den Oxidationsreaktor (10) eingespeiste Dampf zumindest teilweise in die erste Kammer (11) und in die zweite Kammer (12) eingespeist wird.

2. Verfahren nach Anspruch 1, bei der Dampf als Sattdampf oder als um höchstens 5 bis 10 °C überhitzter Dampf in den Oxidationsreaktor (10) eingespeist wird, wobei die Dampftemperatur des in den Oxidationsreaktor (10) eingespeisten Dampfs durch Einmischen von Wasser in überhitzten Dampf eingestellt wird.

3. Verfahren nach Anspruch 2, bei dem eine Menge des Sattdampfs und/oder des überhitzten Dampfs und/oder des Wassers mittels der Regeleinrichtung (TIC) eingestellt wird.

4. Verfahren nach einem der vorstehenden Ansprüche, bei dem die Dampfmenge und/oder Dampftemperatur des in den Oxidationsreaktor (10) eingespeisten Dampfs auf Grundlage einer in der ersten Kammer (11) und/oder der zweiten Kammer (12) erfassten Temperatur und auf Grundlage einer erfassten Temperatur eines aus dem Reaktor (10) ausströmenden Fluids geregelt wird.

5. Verfahren nach Anspruch 4, bei dem die Regelung umfasst, einen Temperatursollwert und eine Maximaltemperatur in der ersten Kammer (11) und/oder der zweiten Kammer (12) vorzugeben.

6. Verfahren nach Anspruch 5, bei dem der Temperatursollwert auf Grundlage der Temperatur des aus dem Reaktor (10) ausströmenden Fluids vorgegeben wird.

7. Verfahren nach einem der vorstehenden Ansprüche, bei dem das Volumen der ersten Kammer (13) größer ist als ein mittleres Volumen aller Kammern (11-19) des Oxidationsreaktors (10) und/oder wenigstens ein Drittel und höchstens zwei Drittel eines Gesamtvolumens aller Kammern (11) umfasst.

8. Verfahren nach einem der vorstehenden Ansprüche, bei dem die Dampfmenge des in den Oxidationsreaktor (10) eingespeisten Dampfs in einem Bereich von 5 bis 100% geregelt wird.

9. Verfahren nach einem der vorstehenden Ansprüche, bei dem der Dampf zumindest teilweise mittels wenigstes einer Dampfeinspeisevorrichtung (21, 22) in den Oxidationsreaktor (10) eingeleitet wird, die einen zylindrischen Abschnitt (211) mit einer Mittelachse (212) und einer Wandung (213) aufweist, wobei die Mittelachse (212) lotrecht ausgerichtet ist oder wird, in der Wandung mehrere Gruppen von Öffnungen (214) ausgebildet sind, jede der Gruppen mehrere der Öffnungen (214) umfasst, und die mehreren Öffnungen (214) jeder der Gruppen in einer oder mehreren Ebenen (215) angeordnet sind, die jeweils senkrecht zur Mittelachse (212) ausgerichtet ist oder sind.

10. Verfahren nach einem der vorstehenden Ansprüche, bei dem die Ablauge und der Sauerstoff oder das sauerstoffhaltige Gasgemisch vorgemischt werden, bevor sie dem Oxidationsreaktor (10) zugeführt werden, und bei dem die Ablauge und der Sauerstoff oder das sauerstoffhaltige Gasgemisch bei Umgebungstemperatur dem Oxidationsreaktor (10) zugeführt werden.

11. Verfahren nach einem der vorstehenden Ansprüche, bei dem der Oxidationsreaktor (10) auf einem Druckniveau von 20 bis 50 bar und auf einem Temperaturniveau von 150 bis 220 °C betrieben wird.

12. Oxidationsreaktor (10) zur Verwendung in einer Anlage (100) zur Behandlung einer sulfidhaltigen Ablauge aus einer Laugewäsche, wobei die Anlage (100) Mittel aufweist, die dafür eingerichtet sind, die Ablauge und Sauerstoff oder ein sauerstoffhaltiges Gasgemisch dem Oxidationsreaktor (10) zuzuführen und in diesem einer Nassoxidation zu unterwerfen, wobei der Oxidationsreaktor (10) Mittel aufweist, die dafür eingerichtet sind, in den Oxidationsreaktor (10) Dampf einzuspeisen, **dadurch gekennzeichnet, dass** der Oxidationsreaktor (10) eine Anzahl von Kammern (11-19) aufweist, von welchen eine erste Kammer (11) ein größeres Volumen als eine zweite Kammer (12) aufweist, wobei Mittel bereitgestellt sind, die Ablauge und den Sauerstoff oder das sauerstoffhaltige Gasgemisch der ersten Kammer (11) zuzuführen, aus der ersten Kammer (11) abströmendes Fluid in die zweite Kammer (12) zu überführen, eine Dampfmenge und/oder Dampftemperatur des in den Oxidationsreaktor (10) eingespeisten Dampfs mit einer Regeleinrichtung (TIC) zu regeln, und den in den Oxidationsreaktor (10) eingespeisten Dampf zumindest teilweise in die erste Kammer (11) und in die zweite Kammer (12) einzuspeisen.

13. Anlage (100) zur Behandlung einer sulfidhaltigen Ablauge aus einer Laugewäsche, mit Mitteln, die dafür eingerichtet sind, die Ablauge und Sauerstoff oder ein sauerstoffhaltiges Gasgemisch einem Oxidationsreaktor (10) zuzuführen und in diesem einer Nassoxidation zu unterwerfen, wobei Mittel bereitgestellt sind, die dafür eingerichtet sind, in den Oxidationsreaktor (10) Dampf einzuspeisen, **dadurch gekennzeichnet, dass** der Oxidationsreaktor (10) als ein Oxidationsreaktor (10) gemäß Anspruch 12 ausgebildet ist.

## Claims

1. Method for treating a spent liquor containing sulfides from a caustic wash, in which method the spent liquor and oxygen or an oxygen-containing gas mixture are supplied to an oxidation reactor (10) and subjected there to wet oxidation, wherein steam is fed into the oxidation reactor (10), **characterized in that** an oxidation reactor (10) having a number of chambers (11-19) is used, of which a first chamber (11) has a larger volume than a second chamber (12), wherein the spent liquor and the oxygen or the oxygen-containing gas mixture are supplied to the first chamber (11), fluid flowing out of the first chamber (11) is transported to the second chamber (12), a steam quantity and/or steam temperature of the steam fed into the oxidation reactor (10) is controlled with a control device (TIC), and the steam fed into the oxidation reactor (10) is at least partially fed into the first chamber (11) and into the second chamber (12).

2. Method according to claim 1, in which steam is fed into the oxidation reactor (10) as saturated steam or steam superheated by at most 5 to 10°C, wherein the steam temperature of the steam fed into the oxidation reactor (10) is adjusted by mixing water into superheated steam.

3. Method according to claim 2, in which a quantity of the saturated steam and/or superheated steam and/or water is adjusted by means of the control device (TIC).

4. Method according to any one of the preceding claims, in which the steam quantity and/or steam temperature of the steam fed into the oxidation reactor (10) is controlled based on a temperature measured in the first chamber (11) and/or the second chamber (12) and based on a measured temperature of a fluid flowing out of the reactor (10).

5. Method according to claim 4, in which the control comprises specifying a temperature setpoint and a maximum temperature in the first chamber (11) and/or the second chamber (12).

6. Method according to claim 5, in which the temperature setpoint is specified based on the temperature of the fluid flowing out of the reactor (10).

7. Method according to any one of the preceding claims, in which the volume of the first chamber (13) is greater than a mean volume of all chambers (11-19) of the oxidation reactor (10) and/or comprises at least one third and at most two thirds of a total volume of all chambers (11).

8. Method according to any one of the preceding claims, in which the steam quantity of the steam fed into the oxidation reactor (10) is controlled within a range from 5 to 100%.

9. Method according to any one of the preceding claims, in which the steam is introduced into the oxidation reactor (10) at least partially by means of at least one steam feed device (21, 22) having a cylindrical section (211) with a central axis (212) and a wall (213), wherein the central axis (212) is oriented vertically, several groups of openings (214) are formed in the wall, each of the groups comprises a plurality of the openings (214), and the plurality of openings (214) of each of the groups are arranged in one or more planes (215) that are each oriented perpendicular to the central axis (212).

10. Method according to any one of the preceding claims, in which the spent liquor and the oxygen or the oxygen-containing gas mixture are premixed before being supplied to the oxidation reactor (10), and in which the spent liquor and the oxygen or the oxygen-containing gas mixture are supplied to the oxidation reactor (10) at ambient temperature.

11. Method according to any one of the preceding claims, in which the oxidation reactor (10) is operated at a pressure level of 20 to 50 bar and at a temperature level of 150 to 220°C.

12. Oxidation reactor (10) for use in a plant (100) for treating a spent liquor containing sulfides from a caustic wash, wherein the plant (100) comprises means that are designed to supply the spent liquor and oxygen or an oxygen-containing gas mixture to the oxidation reactor (10) and to subject it there to wet oxidation, wherein the oxidation reactor (10) comprises means that are designed to feed steam into the oxidation reactor (10), **characterized in that** the oxidation reactor (10) has a number of chambers (11-19), of which a first chamber (11) has a larger volume than a second chamber (12), wherein means are provided to supply the spent liquor and the oxygen or the oxygen-containing gas mixture to the first chamber (11), to transport fluid flowing out of the first chamber (11) to the second chamber (12), to control a steam quantity and/or steam temperature of the steam fed into the oxidation reactor (10) by means of a control device (TIC), and to feed the steam fed into the oxidation reactor (10) at least partially into the first chamber (11) and into the second chamber (12).

13. Plant (100) for the treatment of a spent liquor containing sulfides from a caustic wash, comprising means that are designed to supply the spent liquor and oxygen or an oxygen-containing gas mixture to an oxidation reactor (10) and to subject it there to wet oxidation, wherein means are provided that are designed to feed steam into the oxidation reactor (10), **characterized in that** the oxidation reactor (10) is designed as an oxidation reactor (10) according to claim 12.

## Revendications

1. Procédé de traitement d'une lessive résiduaire contenant du sulfure provenant d'un lavage alcalin, selon lequel la lessive résiduaire et de l'oxygène ou un mélange gazeux contenant de l'oxygène sont introduits dans un réacteur (10) d'oxydation et sont soumis dans celui-ci à une oxydation par voie humide, où de la vapeur est injectée dans le réacteur (10) d'oxydation, **caractérisé en ce qu'un** réacteur (10) d'oxydation comportant un certain nombre de chambres (11 à 19) est utilisé, dont une première chambre (11) présente un volume supérieur au volume d'une deuxième chambre (12), où la lessive résiduaire et l'oxygène ou le mélange gazeux contenant de l'oxygène sont introduits dans la première chambre (11), du fluide s'écoulant de la première chambre (11) est transféré dans la deuxième chambre (12), une quantité de vapeur et/ou une température de vapeur de la vapeur injectée dans le réacteur (10) d'oxydation est/sont régulée(s) à l'aide d'un dispositif de régulation (TIC) et la vapeur injectée dans le réacteur (10) d'oxydation est injectée au moins partiellement dans la première chambre (11) et dans la deuxième chambre (12).

2. Procédé selon la revendication 1, selon lequel de la vapeur, sous la forme de vapeur saturée ou sous la forme de vapeur surchauffée d'au plus 5 à 10 °C, est injectée dans le réacteur (10) d'oxydation, où la température de vapeur de la vapeur injectée dans le réacteur (10) d'oxydation est réglée par incorporation d'eau dans de la vapeur surchauffée.

3. Procédé selon la revendication 2, selon lequel une quantité de la vapeur saturée et/ou de la vapeur surchauffée et/ou de l'eau est réglée au moyen du dispositif de régulation (TIC).

4. Procédé selon l'une quelconque des revendications précédentes, selon lequel la quantité de vapeur et/ou la température de vapeur de la vapeur injectée dans le réacteur (10) d'oxydation est/sont déterminée(s) en fonction d'une température détectée dans la première chambre (11) et/ou dans la deuxième chambre (12) et est/sont régulée(s) en fonction d'une température détectée d'un fluide sortant du réacteur (10).

5. Procédé selon la revendication 4, selon lequel la régulation comprend la définition d'une valeur de consigne de température et d'une température maximale dans la première chambre (11) et/ou dans la deuxième chambre (12).

6. Procédé selon la revendication 5, selon lequel la valeur de consigne de température est définie en fonction de la température du fluide sortant du réacteur (10).

7. Procédé selon l'une quelconque des revendications précédentes, selon lequel le volume de la première chambre (13) est supérieur à un volume moyen de toutes les chambres (11-19) du réacteur (10) d'oxydation et/ou comprend au moins un tiers et au plus deux tiers d'un volume total de toutes les chambres (11).

8. Procédé selon l'une quelconque des revendications précédentes, selon lequel la quantité de vapeur injectée dans le réacteur (10) d'oxydation est régulée dans une plage de 5 à 100 %.

9. Procédé selon l'une quelconque des revendications précédentes, selon lequel la vapeur est introduite dans le réacteur (10) d'oxydation au moins partiellement au moyen d'au moins un dispositif d'injection de vapeur (21, 22), lequel comporte une section (211) cylindrique comportant un axe médian (212) et une paroi (213), où l'axe médian (212) est orienté ou s'oriente perpendiculairement, une pluralité de groupes d'ouvertures (214) sont formés dans la paroi, chacun des groupes comprend plusieurs ouvertures des ouvertures (214) et lesdites plusieurs ouvertures (214) de chacun des groupes sont agencées dans un ou plusieurs plans (215), le(s)quel(s) est/sont respectivement orienté(s) perpendiculairement à l'axe médian (212).

10. Procédé selon l'une quelconque des revendications précédentes, selon lequel la lessive résiduaire et l'oxygène ou le mélange gazeux contenant de l'oxygène sont prémélangés avant d'être introduits dans le réacteur (10) d'oxydation et selon lequel la lessive résiduaire et l'oxygène ou le mélange gazeux contenant de l'oxygène sont introduits dans le réacteur (10) d'oxydation à température ambiante.

11. Procédé selon l'une quelconque des revendications précédentes, selon lequel le réacteur (10) d'oxydation fonctionne à un niveau de pression de 20 à 50 bars et à un niveau de température de 150 à 220 °C.

12. Réacteur (10) d'oxydation destiné à être utilisé dans une installation (100) de traitement d'une lessive résiduaire contenant du sulfure provenant d'un lavage alcalin, où l'installation (100) comporte des moyens, lesquels sont conçus pour introduire la lessive résiduaire et de l'oxygène ou un mélange gazeux contenant de l'oxygène dans le réacteur (10) d'oxydation et pour les soumettre dans celui-ci à une oxydation par voie humide, où le réacteur (10) d'oxydation comporte des moyens, lesquels sont conçus pour injecter de la vapeur dans le réacteur (10) d'oxydation, **caractérisé en ce que** le réacteur (10) d'oxydation comporte un certain nombre de chambres (11-19), dont la première chambre (11) présente un volume supérieur au volume d'une deuxième chambre (12), où des moyens sont fournis pour introduire la lessive résiduaire et l'oxygène ou le mélange gazeux contenant de l'oxygène dans la première chambre (11), pour transférer du fluide s'écoulant de la première chambre (11) dans la deuxième chambre (12), pour réguler une quantité de vapeur et /ou une température de vapeur de la vapeur injectée dans le réacteur (10) d'oxydation à l'aide d'un dispositif de régulation (TIC) et pour injecter la vapeur injectée dans le réacteur (10) d'oxydation au moins partiellement dans la première chambre (11) et dans la deuxième chambre (12).

13. Installation (100) de traitement d'une lessive résiduaire contenant du sulfure provenant d'un lavage alcalin, comportant des moyens, lesquels sont conçus pour introduire de la lessive résiduaire et de l'oxygène ou un mélange gazeux contenant de l'oxygène dans un réacteur (10) d'oxydation et pour les soumettre dans celui-ci à une oxydation par voie humide, où des moyens sont fournis, lesquels sont conçus pour injecter de la vapeur dans le réacteur (10) d'oxydation, **caractérisé en ce que** le réacteur (10) d'oxydation est conçu sous la forme d'un réacteur (10) d'oxydation selon la revendication 12.
